# EUROPÄISCHE PATENTANMELDUNG

(11) **EP 0 872 673 A1**
(43) Veröffentlichungstag der Anmeldung: **21.10.1998**
(21) Anmeldenummer: 98106914.9
(22) Anmeldetag: 16.04.1998
(51) Int. Cl.: F16K 27/06

(54) **Kugelhahn mit Polyäthylengehäuse**

(30) Priorität: 18.04.1997 HU 9700776
(71) Anmelder: DEGAZ RT Délalföldi Gazszolgaltato Rt, 6724 Szeged (HU)
(72) Erfinder: Földhàzi, Péter, 6725 Szeged (HU)
(74) Vertreter: Viering, Jentschura & Partner

(57) **Zusammenfassung**

Die Erfindung betrifft einen Kugelhahn mit Polyäthylengehäuse, welcher ein aus Elektrofitting-Formstücken durch Schweißen zusammengebautes Gehäuse, eine zwischen Abdichtungen (3) angeordnetes Kugelküken (2) aus Metall sowie einen in dem mittleren Schaft eines Elektrofitting-T-Stücks (1) abgedichtet angeordneten Bolzenschaft (4) aufweist, wobei gemäß der Erfindung der in den mittleren Schenkel des Elektrofitting-T-Stücks (1) von innen einsetzbare Bolzenschaft (4) in Längsrichtung von einem Flansch (12) gehalten ist, welcher zwischen dem zylindrischen Schaftteil (11) des Bozenschaftes (4) und dem in die Schlüsselöffnung des Kugelkükens (2) eingepaßten Schlüsselteil (13) ausgebildet ist und in radialer Richtung hervorsteht, wobei dieser Flansch (12) weiterhin in einer Richtung auf der Innenfläche des mittleren Schenkels des Elektrofitting-T-Stücks (1) und andererseits auf das Kugelküken (2) aufstößt.

## Beschreibung

Die Erfindung betrifft einen Kugelzapfen mit Polyäthylengehäuse, welcher ein aus Elektrofitting-Formstücken durch Schweißen zusammengebautes Gehäuse, eine zwischen Abdichtungen angeordnete Zapfenkugel aus Metall sowie einen in dem mittleren Schaft eines Elektrofitting-T-Stücks abgedichtet angeordneten Bolzenschaft aufweist.

Das Material der unterirdischen Erdgasverteilerleitungen ist meistens hartes Polyäthylen, wobei auch die Fittings der Leitung aus hartem Polyäthylen (KPE) hergestellt werden, die Verbindung der Fittings und Rohre erfolgt durch Schweißen. Zum Zusammenschweißen von Rohren werden oft sogenannte Elektrofittings verwendet, die im wesentlichen aus einem Verbindungsflansch bestehen, wobei in der Innenfläche der zylindrischen Wand des Flansches in der Nähe der beiden Rohrenden Windungen aus Widerstandsdraht eingebettet sind und die Anschlüsse der Windungen des Widerstandsdrahtes in Klemmen geleitet sind, die an dem Außenmantel des Elektrofittings angeordnet sind. Mit dem Elektrofitting kann ein sogenanntes Muffenschweißen (Polyfusionsschweißen) durchgeführt werden. Wird durch die Widerstandswindungen des Elektrofittings Strom geleitet, so schmelzen der innere Teil der Wand des Elektrofittings und die äußere Mantelfläche des darin eingebrachten Rohres zusammen und es entsteht eine deformationsfreie Verbindung mit großer Festigkeit. Produktreihen von Elektrofittings werden zum Beispiel von der Firma Georg FISCHER AG (Deutschland) und der Firma DÉGÁZ Rt. (Ungarn, Szeged) vertrieben.

In den unterirdischen Erdgasleitungen werden Kugelzapfen aus Metall oder in die Rohrleitung durch Schweißen eingefügte Kugelzapfen mit Polyäthylengehäuse verwendet. In dem aus Fittings durch Schweißen zusammengestellten Gehäuse des Kugelzapfens mit Polyäthylengehäuse ist eine Zapfenkugel aus Metall zwischen zwei ölbeständigen Abdichtungen angeordnet, wobei das Formende des in dem quergerichteten dritten Rohr des T-Gehäuses abgedichtet angeordneten Bolzenschaftes aus Metall in den Formsitz der Zapfenkugel aus Metall hineinragt.

In der ungarischen Patentanmeldung P 94 01980 (DÉGÁZ Rt.) ist ein Kugelzapfen mit einem harten Polyäthylengehäuse, das aus Elektrofittings zusammengestellt ist, beschrieben. Die Zapfenkugel des hier beschriebenen Kugelzapfens ist mit Abdichtungen in dem abgezweigten KPE-Elektrofitting oder in dem mit auf beide gleichachsigen Rohre gezogenen Elektrofittings versehene Abzweigungen abweisenden KPE-Fitting angeordnet und mit Hilfe eines in das Elektrofitting eingeführten und dort durch Schweißen befestigten Rohrstutzens unmittelbar oder über ein Zwischenstück eingespannt. In der Zapfenkugel ist ein viereckiger Sitz (Nest) für das daran angepaßte Ende des von außen eingeführten Bolzenschaftes ausgebildet, oder die Zapfenkugel ist mit einem angeschlossenen Schaft versehen, um den in dem dritten Rohr des Gehäuses ein Positionierring angeordnet ist. An dem mittleren Teil des Bolzenschaftes ist ein einen größeren Durchmesser aufweisender, mit einer unteren und oberen Schulter abgegrenzter ringförmiger Positionierabschnitt ausgebildet, dessen untere Schulter auf der Endfläche des dritten Rohres des eine Abzweigung aufweisenden KPE-Fittings (oder des eine Abzweigung aufweisenden Elektrofittings) aufliegt. Auf das dritte Rohr des eine Abzweigung aufweisenden KPE-Fittings (oder eine Abzweigung aufweisenden Elektrofittings) ist die eine Hätte eines Elektrofitting-Flansches aufgeschoben, wobei ein in der zweiten Hälfte des Flansches durch Schweißen befestigtes Einlagerohr den Bolzenschaft verdrehbar in Längsrichtung befestigt. Die Abdichtung des Bolzenschaftes ist durch Dichtungsringe gesichert, die zwischen den Seitenflächen (untere und obere) des Positionierringes des Bolzenschaftes und den Stirnflächen des Fittings bzw. Einlagerohrs angeordnet sind.

Diese Lösung weist den Nachteil auf, daß das Halten (Einspannen) und die Abdichtung des Bolzenschaftes auf komplizierte und mehrere Montage- und Schweißoperationen beanspruchende Weise gelöst ist, wodurch die Herstellungskosten des Kugelzapfens erhöht werden.

Das Ziel der Erfindung besteht in der Beseitigung der Nachteile der bekannten Lösungen durch Ausbildung eines solchen Kugelzapfens mit Polyäthylengehäuse, bei welchem das Halten und die Abdichtung des Bolzenschaftes auf einfachere und weniger Kosten beanspruchende Weise gelöst sind.

Zur Lösung der Aufgabe dient ein Kugelzapfen mit Polyäthylengehäuse, welcher ein aus Elektrofitting-Formstücken durch Schweißen zusammengebautes Gehäuse, eine zwischen Abdichtungen angeordnete Zapfenkugel aus Metall sowie einen in dem mittleren Schaft eines Elektrofitting-T-Stücks abgedichtet angeordneten Bolzenschaft aufweist, wobei gemäß der Erfindung der in den mittleren Schenkel des Elektrofitting-T-Stücks von innen einsetzbare Bolzenschaft in Längsrichtung von einem Flansch gehalten ist, welcher zwischen dem zylindrischen Schaftteil des Bolzenschaftes und dem in die Schlüsselöffnung der Zapfenkugel eingepaßten Schlüsselteil ausgebildet ist und in radialer Richtung hervorsteht, wobei dieser Flansch weiterhin in einer Richtung auf der Innenfläche des mittleren Schenkels des Elektrofitting-T-Stücks und andererseits auf der Zapfenkugel aufstößt.

Bei einer bevorzugten Ausführungsform des erfindungsgemäßen Kugelzapfens ist zwischen dem Flansch des Bolzenschaftes und der Innenfläche des mittleren Schenkels des Elektrofitting-T-Stücks ein Lagerring angeordnet.

Zweckmäßig ist weiterhin, daß in einer oder mehreren in dem zylindrischen Schaftteil des Bolzenschaftes ausgebildeten umlaufenden Nut(en) ein abdichtender O-Ring angeordnet ist.

Die Erfindung wird nachstehend anhand eines Ausführungsbeispieles unter Bezugnahme auf die beigefügte Zeichnung näher erläutert. In der Zeichnung zeigt:

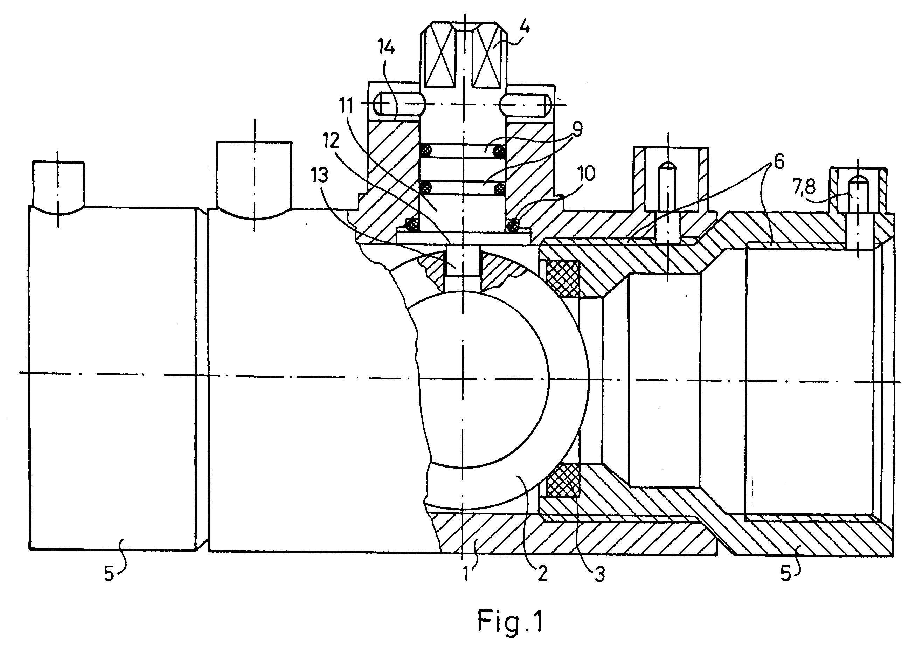

- Fig. 1: einen Kugelzapfen nach der Erfindung teilweise im Längsschnitt im geschlossenen Zustand.

Das aus hartem Polyäthylenmaterial (KPE) bestehende Gehäuse des Kugelzapfens wird im montierten Zustand des Kugelzapfens durch Muffenschweißen aus einem Elektrofitting-T-Stück 1 und zwei K-B Ansatzstücken, den Elektrofittings 5 zusammengestellt. Die Elektrofittings 1, 5 sind an sich bekannte Elemente, welche mit an ihren äußeren Mantelflächen angeordneten zwei elektrischen Anschlüssen 7, 8 versehen sind, wobei durch Anschließen der Anschlüsse 7, 8 an eine elektrische Stromquelle eine in der inneren anschließenden Mantelfläche des Elektrofittings eingebettete Heizspirale 6 geheizt wird und dadurch die zusammenzuschweißenden Mantelflächen auf 230-250 °C erwärmt werden können.

An der Stelle, an welcher die drei Rohröffnungen des T-förmigen Gehäuses aufeinander treffen, ist eine Zapfenkugel 2 angeordnet und auf ihren beiden Seiten durch jeweils eine Abdichtung 3 begrenzt, wobei die Abdichtungen 3 zur Wand der beiden auf gleicher Achsenlinie befindlichen RohrÖffnungen abschließen. Das Drehorgan der zwischen den beiden Abdichtungen 3 angeordneten Zapfenkugel 2 wird von einem Bolzenschaft 4 gebildet, welcher über die mittlere (abzweigende) Rohröffnung des Gehäuses mit seinem als Formteil (zum Beispiel mit quadratischem Querschnitt) ausgebildeten Schlüsselteil 13 in eine - zur Durchgangsöffnung der Zapfenkugel 2 senkrecht angeordnete - entsprechende Formöffnung der Zapfenkugel 2 eingreift, wobei weiterhin an dem äußeren Ende des Bolzenschaftes 4 eine Zapfendrehfläche mit quadratischem Querschnitt ausgebildet ist.

Der Bolzenschaft 4 ist ein im wesentlich zylindrischer Körper, dessen zylindrischer Schaftteil 11 die mittlere Rohröffnung des T-förmigen Gehäuses ausfüllt und darin locker eingepaßt ist. In dem zylinderischen Schaftteil 11 sind umlaufende Nuten ausgebildet, in welchen abdichtende O-Ringe 9 angeordnet sind. Diese O-Ringe 9 sichern die Dichtheit des Kugelzapfens entlang des Bolzenschaftes 4.

Der zylindrische Schaftteil 11 des Bolzenschaftes 4 ist - unmittelbar über dem Schlüsselteil 13 - von einem Flansch 12 begrenzt, dessen Durchmesser größer als der des zylindrischen Schaftteils 11 ist, wobei der Flansch 12 über einen Lagerring 10 an der Innenfläche des Elektrofitting-T-Stücks 1 abgestützt ist. Für den Lagerring 10 ist in dem dargestellten Ausführungsbeispiel in der Innenfläche des Elektrofittings ein zylindrischer Sitz ausgebildet. Durch das (mittelbare) Aufliegen des Flansches 12 auf der Innenfläche des Elektrofittings wird der Platz des von Innen eingebrachten Bolzenschaftes 4 in Längsrichtung begrenzt. Der innere Überdruck hält im Betriebszustand den Bolzenschaft 4 in dieser aufliegenden Lage. In der anderen Richtung ist der mögliche Weg des Bolzenschaftes 4 durch das Auftreffen der unteren Fläche des Flansches 12 auf die Zapfenkugel 2 begrenzt. In dem dargestellten Beispiel ist in der Stirnfläche des mittleren Zweiges des Elektrofitting-T-Stücks 1 eine die Verdrehung des Bolzenschaftes 4 auf 90° begrenzende Vertiefung ausgebildet, wobei an den Anschlagsendwänden der Vertiefung ein in radialer Richtung durch den Bolzenschaft 4 hindurchgeführter Stift 14 anschlagen kann und dadurch die Verdrehung des Bolzenschaftes 4 begrenzt.

Das KPE-Gehäuse des Kugelzapfens wird so zusammengebaut, daß zuerst auf den Bolzenschaft 4 der Lagerring 10 und die O-Ringe 9 aufgeschoben werden und der so montierte Bolzenschaft 4 wird von Innen in die mittlere Rohröffnung eingebracht, danach wird die Zapfenkugel 2 - deren Durchmesser geringer als die innere Öffnung ist - eingelegt, welche mit ihrer Schlüsselöffnung auf den Schlüsselteil 13 des Bolzenschaftes 4 aufgelegt wird. Danach wird die in dem Ende der zwei Elektrofittings 5 zentrierte Abdichtung 3 eingelegt, wodurch die Zapfenkugel 2 in Achsenrichtung positioniert wird. Die beiden Elektrofittings 5 werden in einem zum Abdichten erforderlichen Maß um die Zapfenkugel 2 zusammengepreßt, und in diesem Zustand werden die beiden Elektrofittings 5 in die beiden äußeren einander gegenüberliegenden Rohröffnungen des Elektrofitting-T-Stücks 1 eingeschweißt.

Der erfindungsgemäße Kugelzapfen mit Polyäthylengehäuse weist darüber hinaus, daß dieser aus Elektrofittings zusammengestellt ist und somit Schweißprobleme die Herstellung nicht beeinflussen, den Vorteil auf, daß die Konstruktion einfach mit wenigen Operationen zusammengestellt werden kann, die Herstellung wirtschaftlich und produktiv ist.

### LISTE DER VERWENDETEN BEZUGSZEICHEN

- 1: Elektrofitting-T-Stück
- 2: Metallzapfenkugel
- 3: Abdichtung
- 4: Bolzenschaft
- 5: Elektrofitting
- 6: Heizspirale
- 7: Anschluß
- 8: Anschluß
- 9: O-Ring
- 10: Lagerring
- 11: Schaftteil
- 12: Flansch
- 13: Schlüsselteil
- 14: Stift

## Patentansprüche

1. Kugelzapfen mit Polyäthylengehäuse, welcher ein aus Elektrofitting-Formstücken durch Schweißen zusammengebautes Gehäuse, eine zwischen Abdichtungen (3) angeordnete Zapfenkugel (2) aus Metall sowie einen in dem mittleren Schaft eines Elektrofitting-T-Stücks (1) abgedichtet angeordneten Bolzenschaft (4) aufweist, **dadurch gekennzeichnet**, daß der in den mittleren Schenkel des Elektrofitting-T-Stücks (1) von innen einsetzbare Bolzenschaft (4) in Längsrichtung von einem Flansch (12) gehalten ist, welcher zwischen dem zylindrischen Schaftteil (11) des Bolzenschaftes (4) und dem in die Schlüsselöffnung der Zapfenkugel (2) eingepaßten Schlüsselteil (13) ausgebildet ist und in radialer Richtung hervorsteht, wobei dieser Flansch (12) weiterhin in einer Richtung auf der Innenfläche des mittleren Schenkels des Elektrofitting-T-Stücks (1) und andererseits auf der Zapfenkugel (2) aufstößt.

2. Kugelzapfen nach Anspruch 1, **dadurch gekennzeichnet**, daß zwischen dem Flansch (12) des Bolzenschaftes (4) und der Innenfläche des mittleren Schenkels des Elektrofitting-T-Stücks (1) ein Lagerring (10) angeordnet ist.

3. Kugelzapfen nach Anspruch 1 oder 2, **dadurch gekennzeichnet**, daß in einer oder mehreren in dem zylindrischen Schaftteil (11) des Bolzenschaftes (4) ausgebildeten umlaufenden Nut(en) ein abdichtender O-Ring (9) angeordnet ist.
